# EUROPEAN PATENT SPECIFICATION

(11) **EP 1 398 540 B1**
(45) Date of publication and mention of the grant of the patent: **08.06.2011**
(21) Application number: 03019399.9
(22) Date of filing: 27.08.2003
(51) Int. Cl.: F16H 25/08

(54) **Cam rotation control mechanism**
Vorrichtung zur Steuerung der Drehbewegung eines Nockens
Mécanisme de contrôle de la rotation d'une came

(30) Priority: 12.09.2002 JP 2002266744
(43) Date of publication of application: 17.03.2004
(73) Proprietor: Sharp Kabushiki Kaisha, Osaka-shi, Osaka 545-0013 (JP)
(72) Inventor: Nakamura, Nobuyuki, Nara-shi, Nara 630-8453 (JP)
(74) Representative: Müller - Hoffmann & Partner

(56) References cited:
- EP-A2- 1 164 605
- FR-A1- 2 399 587
- GB-A- 1 406 807
- JP-A- 5 139 588
- JP-A- 6 211 367

## Description

### BACKGROUND OF THE INVENTION

### Field of the Invention

The present invention relates to a cam rotation control mechanism for use in switching between a plurality of modes or in positional control of an arm, for example.

### Description of the Related Art

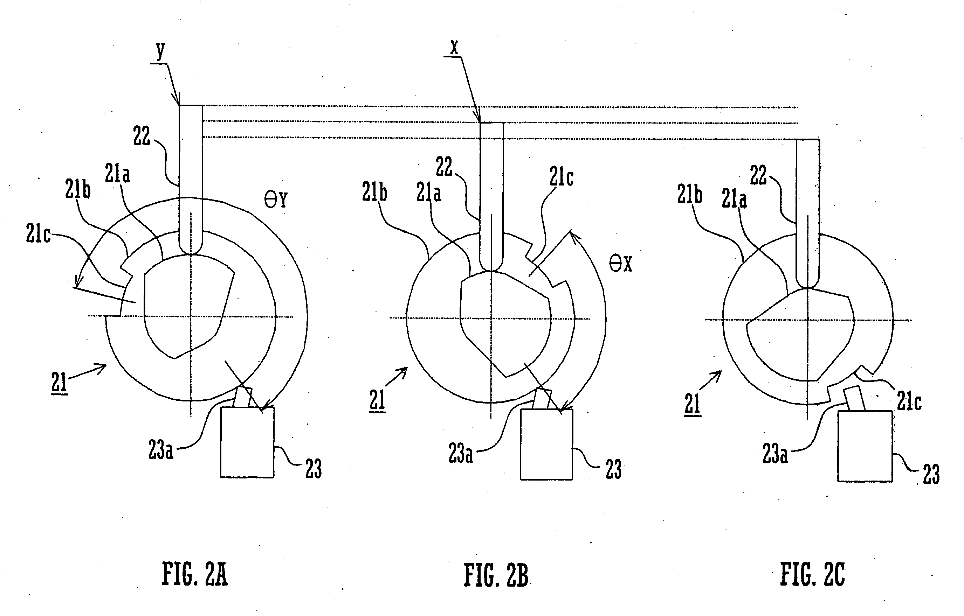

Fig. 2 schematically illustrates an example of conventional cam rotation control mechanism. A cam 21 comprises two plate cams joined together, i.e. a cam 21a having an eccentric shape and a circular cam 21b formed with a notch 21c. The cam 21 has a center of rotation indicated by a point of intersection of two phantom lines in the figure, to which a non-illustrated rotating shaft is attached. An arm 22 has a tip end portion constantly abutting the outer circumference of the cam 21a by its own weight. As the rotational position (angle) of the cam 21a varies, the arm 22 moves in the vertical direction (up and down) in the figure. The cam 21 is driven for rotation in the counterclockwise direction by a non-illustrated driver such as a motor.

The cam rotation control mechanism shown in Fig. 2 needs to detect the rotational position (angle) of the cam 21 in order to control the position of the arm 22. For this reason, the aforementioned notch 21c of the cam 21 is detected with a sensor 23 to control the movement of the arm 22. Specifically, the sensor 23 includes a detecting portion 23a having an end which usually abuts the outer circumference of the cam 21b but comes out of contact with the cam 21b when the notch 21c comes closest to the sensor 23 due to the rotation of the cam 21b. The state where the detecting portion 23a of the sensor 23 abuts the cam 21b as shown in Figs. 2A and 2B is determined as "ON", whereas the state where the detecting portion 23a of the sensor 23 does not abut the cam 21b as shown in Figs. 2C is determined as "OFF". The position of the cam 21 in which the detecting portion 23a does not abut the cam 21b is determined as a home position.

Thus, the cam rotation control mechanism shown in Fig. 2 can detect the home position by checking ON/OFF signals from the sensor 23. Further, the position of the arm 22 can be controlled based on the angle of rotation of the cam 21 from the home position. Specifically, the position of the arm 22 can be controlled to a position x by controlling the angle of rotation of the cam 21 from the home position to an angle θx as shown in Fig. 2B, whereas the position of the arm 22 can be controlled to a position y by controlling the angle of rotation of the cam 21 to an angle θ_{Y} as shown in Fig. 2A.

Japan Patent Laid Open Publication hei No.6-211367 discloses an alternative arrangement for detecting the rotational position (angle) of a cam, wherein an initial lever abutting the cam formed with a notch has a tip end brought into contact with a detecting portion of a sensor for detecting the rotational position of the cam.

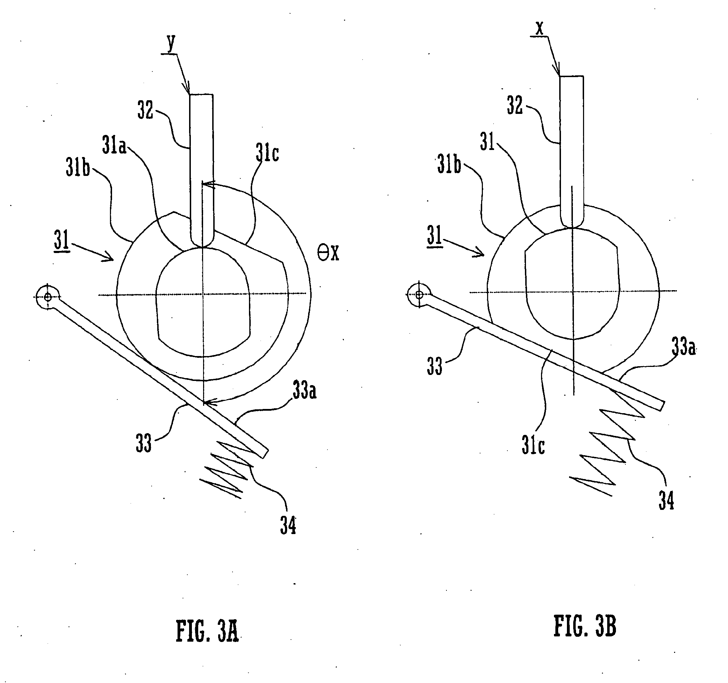

Fig. 3 is a schematic view illustrating an example of conventional cam rotation control mechanism which differs from that shown in Fig. 2. A cam 31 comprises two plate cams joined together, i.e. a cam 31a having an eccentric shape and a cam 31b in the form of a circle partially cut away. The cam 31 has a center of rotation indicated by a point of intersection of two phantom lines in the figure, to which a non-illustrated rotating shaft is attached. An arm 32 has a tip end portion constantly abutting the outer circumference of the cam 31a by its own weight so that the arm 32 is movable in the vertical direction (up and down) in the figure. When receiving driving power from a non-illustrated driver such as a motor, the cam 31 rotates in the counterclockwise direction, for example.

In the cam rotation control mechanism shown in Fig. 3, a holding plate 33 abuts the outer circumference of the cam 31b. The holding plate 33 is pivotable about its one end and is pressed against the cam 31 at its other end by a spring 34 with a predetermined pressure so that a surface 33a of the holding plate 33 is brought into contact with the cam 31b. The cam 31b is in the form of a circle partially cut away as described above and has a flat surface 31c which can contact the holding plate 33, as shown in Fig. 3B. The rotational position of the cam 1 in this state is determined as a home position so that the home position can be accurately detected. Accordingly, the position of the arm 32 can be controlled based on detection of the rotational position (angle) of the cam 31.

Also, there exists an arrangement wherein a mechanism as shown in Fig. 3 is applied to a press roll to vary the pressing force of the roll in accordance with the rotational position of the cam, as disclosed in Japan Patent Laid Open Publication hei No.5-139588, which discloses the features of the preamble of claim 1.

Generally, a cam rotation control mechanism first detects the home position of a cam upon starting and then controls the rotation of the cam in accordance with the number of pulses of a stepping motor counted from the home position. Therefore, the detection of the home position is essential. With such a conventional cam rotation control mechanism, however, it is difficult to determine the current position of the cam unless the cam is rotated once by energizing the driver in order to detect the home position of the cam in the initial state of the cam rotation control mechanism.

Further, when the motor is stopped or the power source is reset due to external causes, the sensor for detecting the position of the cam is also reset, which makes it impossible to detect the rotational position of the cam. Therefore, it becomes necessary to detect the home position again. For this purpose, the cam needs to be rotated in the same manner as in the initial state.

As for the arrangements shown in Figs. 2 and 3, they cannot be said to be perfect mechanisms capable of detecting the rotational position of the cam accurately. Specifically, with the arrangement shown in Fig. 2, slight deviation occurs in detected home position due to causes such as the width of the notch 21c and the time lag from the detection of OFF by the sensor 23 to the stopping of rotation of the cam 21.

With the arrangement shown in Fig. 3, on the other hand, the cam can be stabilized in its accurate home position when the flat surface 31c of the cam 31b is brought into intimate contact with the holding plate 33, as described above. However, this advantage cannot be obtained when the holding plate 33 is in contact with a portion of the cam 31 other than the flat surface 31c. Therefore, the home position cannot be accurately detected without determining what position the cam 31 assumes in the initial state. Further, this arrangement is not provided with a device for detecting an absolute position.

There exists another conventional cam rotation control mechanism in which the arrangement shown in Fig. 2 and that shown in Fig. 3 are combined together for accurate detection of the home position. However, such a construction requires a plurality of parts just for the detection of the home position and, in addition, the configuration of the cam itself becomes inevitably complicated.

GB 1 406 807 A describes a cam assembly for an ignition distributor including a driven shaft and a hollow cam shaft rotatably mounted on the driven shaft wherein the driven shaft and the cam shaft are coupled by a centrifugal mechanism altering the angular position of the cam shaft relative to the driven shaft in accordance with the speed of rotation of the assembly.

EP 1 164 605 A2 describes a loading device for a storage spring with a cam disc, a lever system and a catching device, in which during a loading phase of the storage spring the cam disc and the lever system are coupled and during a disload phase of the storage spring the cam disc and the catching device can be decoupled.

The problem is solved by a cam rotation control mechanism according to claim 1.

### SUMMARY OF THE INVENTION

An object of the present invention is to provide a cam rotation control mechanism capable of reliably detecting the home position of the cam while reducing the required parts count and the cost.

In accordance with the present invention, there is provided a cam rotation control mechanism such that a cam is rotated when driving power of a rotating device is transmitted to the cam through a clutch mechanism while a home position setting device causes the cam to turn to a home position when the transmission of driving power of the rotating device to the cam is interrupted by the clutch mechanism.

The home position setting device may comprise, for example, a resilient member having ends which are so fixed that a stretched length of the resilient member becomes shortest when the cam is in the home position. With such a feature, the cam can be reliably turned to the home position. Accordingly, the device for detecting an angle of rotation of the cam is unnecessary, and there is no need to energize the rotating device as the driving power source for the rotation of the cam. Moreover, the cam can be quickly turned to the home position if the clutch mechanism is configured such that the connection with the rotating device is cut off at the time when the operation of the cam rotation control mechanism is stopped, or when the rotating device stops driving or the electric power source is reset due to external causes.

The foregoing and other objects, features and attendant advantages of the present invention will become more apparent from the reading of the following detailed description of the invention in conjunction with the accompanying drawings.

### BRIEF DESCRIPTION OF THE DRAWINGS

Fig. 1 is a schematic view illustrating a cam rotation control mechanism according to the present invention;
Fig. 2 is a schematic view illustrating an example of conventional cam rotation control mechanism; and
Fig. 3 is a schematic view illustrating an example of conventional cam rotation control mechanism which differs from that shown in Fig. 2.

### DETAILED DESCRIPTION OF THE PREFERRED EMBODIMENTS

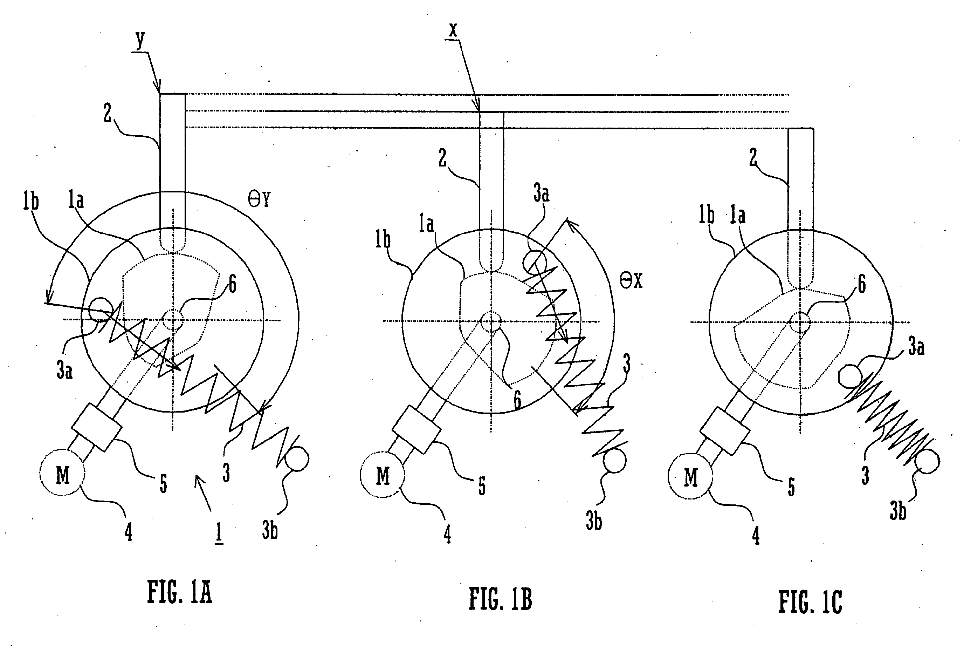

Hereinafter, the present invention will be described in detail with reference to the accompanying drawings. Fig. 1 is a schematic view illustrating a cam rotation control mechanism according to the present invention. The cam rotation control mechanism shown comprises a cam 1, an arm 2, a spring 3 as a resilient member, a motor 4 as a rotating device and a clutch mechanism 5. The cam 1 comprises a cam 1a having an eccentric shape and a circular cam 1b which are joined together and has a center of rotation to which a rotating shaft 6 is attached. The arm 2 has a tip end portion constantly abutting the outer circumference of the cam 1a by its own weight. As the rotational position (angle) of the cam 1 varies, the arm 2 moves in the vertical direction (up and down) in the figure. When receiving driving power from the motor 4 through the clutch mechanism 5, the cam 1 rotates. The cam 1 is freely turnable when the transmission of driving power from the motor 4 to the cam 1 is interrupted by the clutch mechanism 5.

The clutch mechanism 5 cuts off the connection between the motor 4 and the cam 1 at the time when the rotation of the cam 1 is stopped or when the motor 4 stops driving or the power source is reset due to external causes.

The spring 3 has one end 3a attached to a side face of the cam 1 at a location adjacent the peripheral edge (outer circumference) of the cam 1 and another end 3b fixed at a location outside the outer circumference such that the stretched length of the spring becomes shortest when the cam 1 is in its home position. Even when the cam 1 assumes the home position, the spring 3 pulls the cam 1 with a predetermined pulling force. When the cam 1 assumes a position at which the spring 3 is stretched to a maximum length, the spring 3 exerts a pulling force such that the cam 1 can rotate with no difficulty and that the cam 1 can be turned to the home position quickly when the transmission of driving power to the cam 1 is interrupted by the clutch mechanism 5. Further, when the transmission of driving power to the cam 1 out of the home position is interrupted by the clutch mechanism 5, the cam 1 returns to the home position quickly by the pulling force of the spring 3 causing the cam 1 to turn clockwise or counterclockwise.

In this way, when the transmission of driving power from the motor 4 to the cam 1 is interrupted by the operation of the clutch mechanism 5, the cam 1 is pulled by the spring 3 at the end 3a for rotation, so that the cam 1 returns to the home position.

The position of the arm 2 can be controlled to a position x by controlling the angle of rotation of the cam 1 from the home position to an angle θx, whereas the position of the arm 2 can be controlled to a position y by controlling the angle of rotation of the cam 1 to an angle θ_{Y}.

It is possible that: the arm 2 is formed with a projection (boss) at a portion thereof contacting the cam 1 while the cam 1 is formed with a groove extending along the outer circumference thereof for receiving the projection; and a spring (resilient member) is provided for causing the arm 2 to return to its home position in the moving direction automatically, similarly to the cam 1.

As the spring 3, use may be made of a resilient member such as a coil spring, a resin spring, a tension spring or a leaf spring, for example.

The construction described above makes it possible to detect the home position of the cam accurately, to turn the cam to the home position, and to allow the cam to rest stationarily and stably in that position. Further, unlike the prior art cam mechanisms, the cam rotation control mechanism of the present invention does not need such components as a sensor for detecting the rotational position of the cam and a holding plate for holding the cam in the home position. Further, there is no need to machine the cam to form a notch or the like therein. Therefore, it is possible to reduce the required parts count and the time and labor required for working the parts. Moreover, only the spring is required for returning the cam to the home position when the transmission of driving power from the motor to the cam is interrupted by the operation of the clutch mechanism. Thus, the cost and the size of the mechanism can be considerably reduced by virtue of a reduced parts count.

It is to be noted that preferable cams for use in the present invention include a cam having an eccentric structure and a cam having a polygonal shape.

According to the present invention, the following advantages can be obtained.

The cam can quickly turn to the home position if the clutch mechanism is configured such that the connection with the rotating device is cut off at the time when the operation of the cam rotation control mechanism is stopped, or when the rotating device stops driving or the electric power source is reset due to external causes. Further, the cam rotation control mechanism of the present invention does not need a sensor for detecting the rotational position of the cam or a holding plate for holding the cam in the home position.

Since the resilient member is so fixed that the stretched length of the resilient member becomes shortest when the cam is in the home position, the cam can be turned to the home position reliably.

When the cam is in the home position, the cam can rest stationarily and stably in the home position.

While only certain presently preferred embodiments of the present invention have been described in detail, as will be apparent for those skilled in the art, certain changes and modifications may be made in embodiments as defined by the following claims.

## Claims

1. A cam rotation control mechanism provided with a cam (1) which is rotatable by driving power of rotating means (4), **characterized by** comprising:
clutch means (5) which
transmits driving power of rotating means (4) to the cam (1),
interrupts the transmission of driving power to the cam (1), and
cuts off a connection between the rotating means (4) and the cam (1) when the rotating means (4) is stopped or the power source is reset; and
home position setting means for causing the cam (1) to turn to a home position without driving power from the rotating means (4) when the transmission of driving power to the cam (1) is interrupted by the clutch means (5).

2. The cam rotation control mechanism in accordance with claim 1, wherein the home position setting means comprises a resilient member (3) having
one end (3a) attached to the cam (1) at a location adjacent a peripheral edge of the cam and
another end (3b) fixed at a location outside an outer circumference of the cam (1) such that a stretched length of the resilient member (3) becomes shortest when the cam (1) is in its home position.

3. The cam rotation control mechanism in accordance with claim 1 or 2, wherein the home position setting means is operative to pull the cam (1) with a predetermined pulling force when the cam (1) is in the home position.

4. The cam rotation control mechanism in accordance with claim 2 or 3, wherein the resilient member (3) is a spring.

## Patentansprüche

1. Nockendrehungs-Steuermechanismus, der mit einem Nocken (1) versehen ist, der durch Antriebsleistung von Drehmitteln (4) drehbar ist, **gekennzeichnet durch**:
Kupplungsmittel (5), die
Antriebsleistung von Drehmitteln (4) an den Nocken (1) übertragen,
die Übertragung von Antriebsleistung an den Nocken (1) unterbrechen und
eine Verbindung zwischen den Drehmitteln (4) und dem Nocken (1) trennen, wenn die Drehmittel (4) angehalten werden oder die Leistungsquelle zurückgesetzt wird; und
Ausgangspositions-Einstellmittel, um den Nocken (1) zu veranlassen, ohne Antriebsleistung von den Drehmitteln (4) in eine Ausgangsposition zurückzukehren, wenn die Übertragung von Antriebsleistung an den Nocken (1) **durch** die Kupplungsmittel (5) unterbrochen ist.

2. Nockendrehungs-Steuermechanismus nach Anspruch (1), wobei die Ausgangspositions-Einstellmittel ein elastisches Element (3) enthalten, das aufweist:
ein Ende (3a), das an dem Nocken (1) an einer Stelle in der Nähe einer Umfangskante des Nockens befestigt ist, und
ein weiteres Ende (3b), das an einer Stelle außerhalb eines äußeren Umfangs des Nockens (1) befestigt ist, so dass eine gedehnte Länge des elastischen Elements (3) am kürzesten wird, wenn sich der Nocken (1) in seiner Ausgangsposition befindet.

3. Nockendrehungs-Steuerinechanismus nach Anspruch 1 oder 2, wobei die Ausgangspositions-Einstellmittel betreibbar sind, um den Nocken (1) mit einer vorgegebenen Zugkraft zu ziehen, wenn sich der Nocken (1) in der Ausgangsposition befindet.

4. Nockendrehungs-Steuermechanismus nach Anspruch 2 oder 3, wobei das elastische Element (3) eine Feder ist.

## Revendications

1. Mécanisme de commande de rotation de came pourvu d'une came (1) apte à tourner grâce à l'énergie d'entraînement de moyens de rotation (4), **caractérisé en ce qu'**il comprend :
- des moyens d'embrayage (5) qui
transmettent l'énergie d'entraînement des moyens de rotation (4) à la came (1),
interrompent la transmission de l'énergie d'entraînement à la came (1) et
suppriment une liaison entre les moyens de rotation (4) et la came (1) quand les moyens de rotation (4) sont arrêtés ou que la source d'énergie est remise à zéro ; et
- des moyens de réglage de position initiale pour amener la came (1) à tourner jusqu'à une position initiale sans énergie d'entraînement provenant des moyens de rotation (4), quand la transmission d'énergie d'entraînement à la came (1) est interrompue par les moyens d'embrayage (5).

2. Mécanisme de commande de rotation de came selon la revendication 1, dans lequel les moyens de réglage de position initiale comprennent un élément élastique (3) avec
une extrémité (3a) fixée à la came (1) à un endroit situé près d'un bord périphérique de la came, et
une autre extrémité (3b) fixée à un endroit situé à l'extérieur d'une circonférence extérieure de la came (1) de telle sorte qu'une longueur allongée de l'élément élastique (3) devienne la plus courte quand la came (1) est dans sa position initiale.

3. Mécanisme de commande de rotation de came selon la revendication 1 ou 2, dans laquelle les moyens de réglage de position initiale sont aptes à tirer la came (1) avec une force de traction prédéterminée, quand la came (1) est dans sa position initiale.

4. Mécanisme de commande de rotation de came selon la revendication 2 ou 3, dans laquelle l'élément élastique (3) est constitué par un ressort.
